(19) Europäisches Patentamt

European Patent Office

Office européen des brevets

(11) **EP 0 446 541 B1**

(12) **EUROPEAN PATENT SPECIFICATION**

(45) Date of publication and mention
of the grant of the patent:
**27.12.1996 Bulletin 1996/52**

(51) Int Cl.⁶: **H04N 9/28**

(21) Application number: **90402742.2**

(22) Date of filing: **03.10.1990**

(54) **Automatic video convergence system**

Automatisches Videokonvergenzsystem

Système de convergence vidéo automatique

(84) Designated Contracting States:
**BE DE FR GB IT NL**

(30) Priority: **16.03.1990 CA 12377**

(43) Date of publication of application:
**18.09.1991 Bulletin 1991/38**

(73) Proprietor: **ELECTROHOME LIMITED**
**Kitchener Ontario N2G 4J6 (CA)**

(72) Inventors:
• **Schmidt, Terrence Carl**
**Wellesley, Ontario N0B 2TO (CA)**
• **Koebel, Alen**
**Kitchener, Ontario N2G 2T7 (CA)**

(74) Representative: **Joly, Jean-Jacques et al**
**Cabinet Beau de Loménie**
**158, rue de l'Université**
**75340 Paris Cédex 07 (FR)**

(56) References cited:
• **IBM TECHNICAL DISCLOSURE BULLETIN. vol. 32, no. 2, July 1988, NEW YORK US pages 488 - 493; 'AUTOMATIC ALIGNMENT OF COLOR TELEVISION SYSTEMS'**
• **PATENT ABSTRACTS OF JAPAN vol. 10, no. 121 (E-401)16 December 1985& JP-A-60 254 987**
• **PATENT ABSTRACTS OF JAPAN vol. 4, no. 148 (E-30)30 July 1980 & JP-A-55 099 882**

**Description**

The present invention relates in general to video systems, and more particularly to a digital convergence correction circuit for convergence correction of projected electron beams in projection video display systems.

Well known colour video projection systems are comprised of three colour electron guns (red, green and blue) for emitting three separate electron beams which are transmitted through respective CRT face plates having respective red, green and blue phosphor layers. The coloured beams emitted from the phosphor on the faceplate of each CRT are then focused together on a projection surface with varying intensities, for creating a composite colour image. Each of the electron beams is magnetically deflected via respective main deflection coils for directing the beams from left to right across the projection surface along a plurality of horizontal scan lines. The number of scan lines appearing on the projection surface for each image (raster) may vary in relation to the scanning frequency of the projection system.

Due to various magnetic influences and non-linearities in the projection system, each of the electron beams may bend more or less in relation to one another at the left and right and top and bottom extremities of the image on the projection surface.

Furthermore, since the respective coloured light beams are projected at different angles for focusing at the centre point, misregistration of the images is known to occur on the edges of the screen, etc.

In order to correct the problem of misregistration of images in projection video systems, convergence systems have been developed for deflecting respective ones of the beams by predetermined amounts in accordance with information input to the convergence system by an operator using a cursor control, etc.

It is known to use vertical and horizontal convergence coils for re-orienting the electron beams at predetermined locations within the image in order to effect proper registration of the three colours.

More recently, automatic convergence systems have been developed which utilize sensors for detecting misregistration of a projected image at various zones on the screen and automatically deflecting the electron beams by the required amounts for obtaining convergence of the image without user input. The sensors in known automatic convergence systems have typically been fabricated using CCD arrays. The CCD arrays detect and digitize the projected image, which is then processed via microprocessor circuitry for detecting misregistration. In response to detecting misregistration, the microprocessor circuitry generates appropriate convergence coil signals, etc. A disadvantage of CCD based sensors is that such sensors integrate the image over an entire raster frame. Accordingly, the signal-to-noise ratio of the detected image relative to detected ambient light is very low. As a result, CCD image sensors are characterized by poor image detection, especially in relation to blue phosphor.

Another form of automatic alignment of projection colour television systems is disclosed in IBM Technical Disclosure Bulletin. Vol. 32, No. 2, July 1988, New York US, pages 488 to 493.

The approach uses a small mirror prisms or mirror flakes mounted permanently at each desired position onto a screen 11. The mirror prisms are oriented so as to cast light from individual red, green and blue projection tubes towards a single photodetector. The prisms reflect the light impinging thereon momentarily during the scanning of the projection tubes. The timing of the detected light signal is correlated with the planned position of the dot.

The reference suggests, as an alternative, to point a telescope at successive imaginary points of the screen and to detect the transient light signals at these points during the scanning operation.

According to an aspect of the present invention, an automatic convergence system is provided for generating a target image on the display surface at a point to be converged using a video projector, aiming a photosensor array at the target using direct drive microstepping motors, sensing misregistration between colour components of the target image by means of the photosensor array, and moving the colour components at the convergence point in order to register the component colour images.

The means comprising the invention are defined in claim 1 and a corresponding method is defined in claim 12.

Direct drive microstepping motors provide highly accurate (approximately 0.05° per microstep) means for locating the target image. Registration of the component colour images thereafter may be effected by offset measurement from the located position of the initial target image. The microstepping motors are low friction devices which are capable of moving from a first to a second position and returning to the first position with a high degree of accuracy in repositioning.

The photosensor of the present invention overcomes the disadvantages discussed above with reference to CCD sensors. In particular, because a photodiode array has a fast response as opposed to the relatively slow response from time averaging CCD sensors, the high peak intensities from a CRT phosphor can be readily sensed from a low reflectivity surface such as a rear screen and off-axis high-gain (i.e. curved) front screens.

According to an additional aspect of the present invention, compensation diodes are connected with reverse polarity to respective ones of the quadrant photodiodes in the sensor. The compensation photodiodes are located outside of the illumination area of the quadrant photodiodes such that the illuminated image falls only on the inner photodiodes whereas ambient light illuminates both the quadrant and compensation photodiodes. Accordingly, both the compensation and quadrant photodiodes generate equal but reverse photogenerated currents in response to the ambient light. The photogenerated currents due to ambient light cancel, leaving only the current due to illumination of the inner photodiodes by the image.

An additional advantage of the present invention is that the dark current generated by the compensation diodes is equal and in opposite direction to the dark current generated by the respective inner quadrant photodiodes, since both photodiodes are electrically matched and operate at the same temperature.

A preferred embodiment of the present invention will be described in greater detail below with reference to the following drawings, in which:

Figure 1 is a schematic illustration of an automatic convergence system employing a quad photodiode sensor in accordance with the present invention;

Figure 2 is a plan view of the quad photodiode sensor in accordance with the preferred embodiment;

Figure 3 is a block diagram of the control circuit and locator assembly in accordance with the preferred embodiment;

Figure 4 is a diagrammatic representation of convergence control points on a projected raster, in accordance with the present invention;

Figure 5 illustrates a pair of selection menus displayed in accordance with the preferred embodiment;

Figure 6 is a save menu displayed in accordance with the preferred embodiment;

Figure 7 illustrates a pair of help screens displayed in accordance with the preferred embodiment;

Figure 8 is a software control flow diagram in accordance with the preferred embodiment;

Figure 9 illustrates the quadrant sensor coordinate system in accordance with the preferred embodiment; and

Figure 10 illustrates a spiral search path of the photodiode array in accordance with an aspect of the present invention.

Detailed Description of the Invention

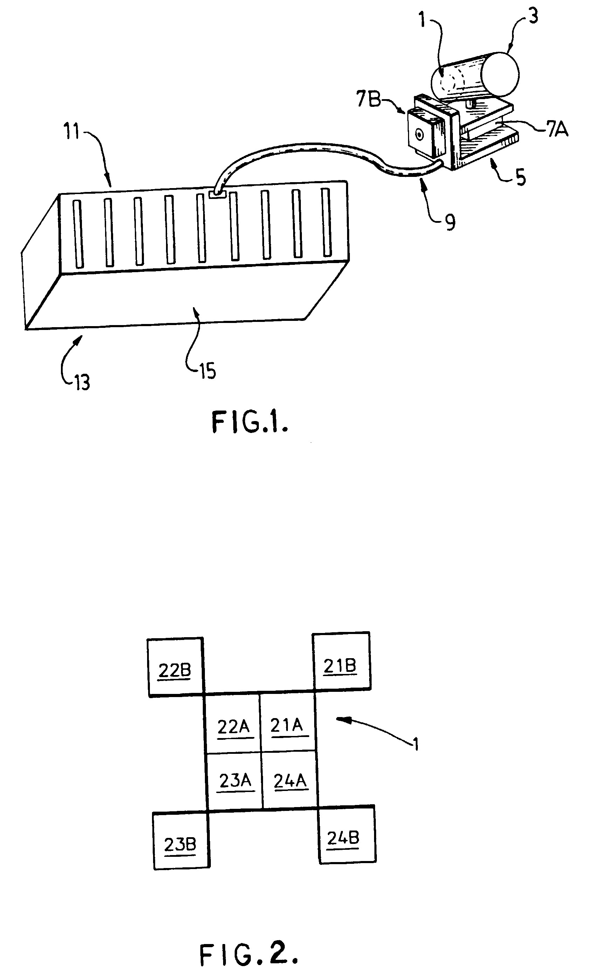

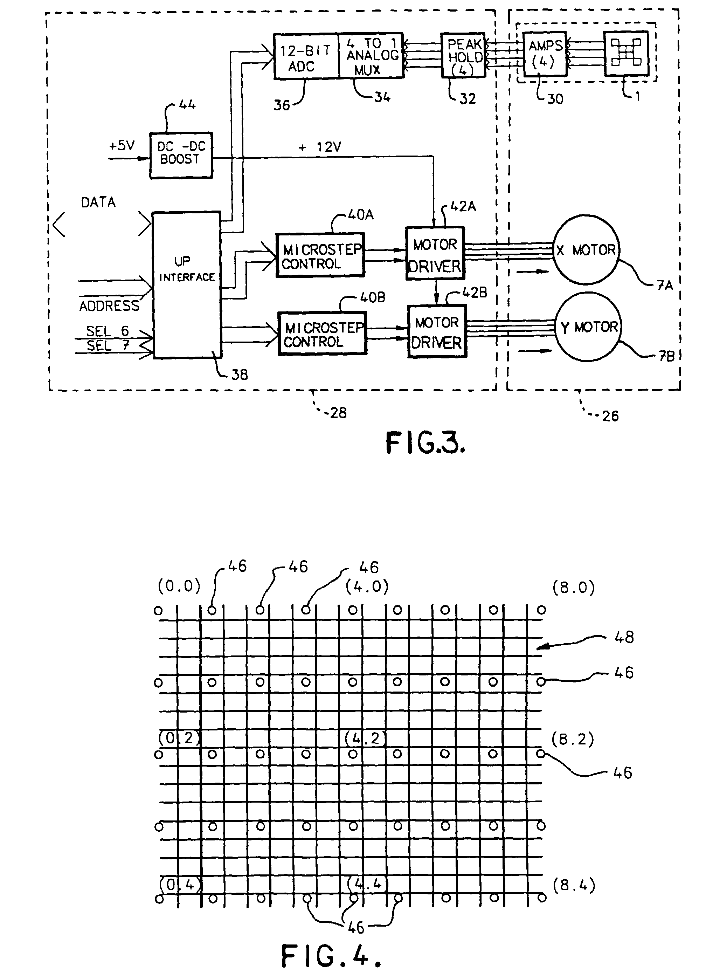

Turning to Figure 1, an automatic convergence system is shown according to the preferred embodiment comprising a quadrant photodiode sensor 1 in association with imaging lens 3 and mounted on an X/Y motor assembly 5. The sensor/motor assembly 5 consists of a mechanical structure supporting two stepper motors 7 in an X/Y gimbal configuration for orienting the imaging lens 3 and sensor 1 to focus on a projected image (not shown), and a tubular housing 4 containing the lens 3 at one end and the sensor 1 at the other end. The sensor is attached to a small surface mount preamplifier board, as discussed below with reference to Figure 3.

Preferably, the sensor/motor assembly 5 is attached to the frame of a projector (not shown) directly beneath the center (green) lens thereof.

A wire harness 9 connects the quadrant photodiode sensor 1 and motors 7 to a motherboard 11 within a card cage 13 supporting a main printed circuit board 15 which contains the circuitry for operating the motors 7 and digitizing the signals received from the quadrant photodiode sensor 1, as discussed in greater detail below with reference to Figure 3.

The positions of the red, green and blue image components at the projected image point are detected by the sensor 1 and adjusted to coincide with the center of the quadrant. Full screen convergence is effected by repeating the operation for a multiplicity of convergence points of the entire raster image, as discussed in greater detail below with reference to Figure 4.

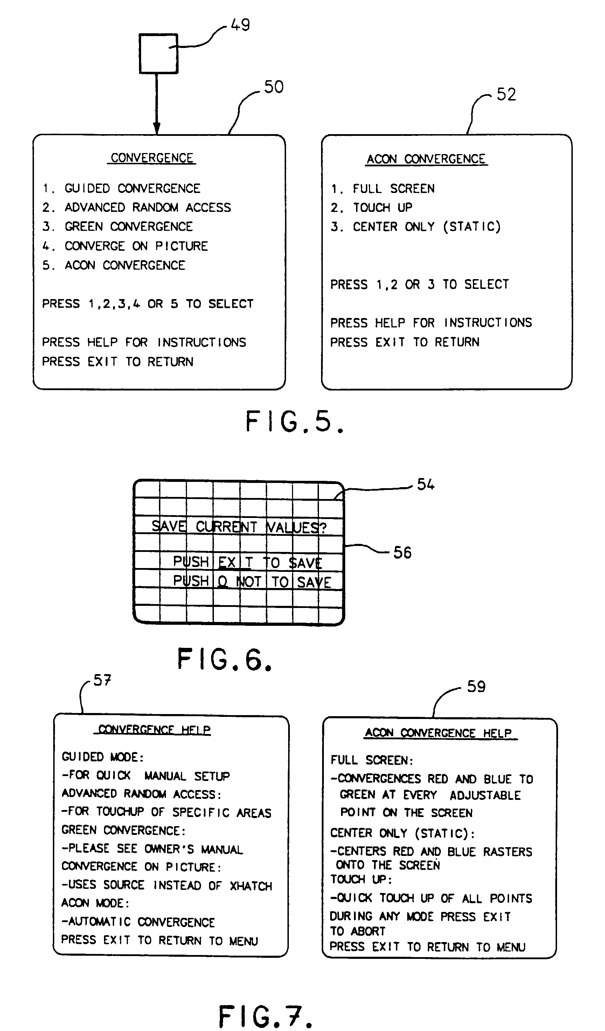

The automatic convergence operation is initiated by making a selection from a convergence menu (Figure 5) via the projector's remote or built-in key-pads (not shown). Thereafter, software running in the convergence system microprocessor (not shown) assumes control of the projector until completion of the convergence or until aborted by a user. During the convergence operation, the microprocessor uses the video control board (not shown, but incorporated in card cage 13) to display targets and patterns required by the convergence algorithms.

Sensor 1 is shown in greater detail with reference to Figure 2, comprising a quadrant arrangement of four inner photodiodes 21A, 22A, 23A and 24A, and four corresponding and matched reverse biased outer compensation photodiodes 21B, 22B, 23B and 24B. As discussed above, the function of reverse bias compensation diodes 21B-24B is to cancel the effect of ambient light illumination and sensor dark current in the sensor 1. In particular, by direct connection of the compensation diodes 21B-24B in a reverse direction of polarity to respective ones of the quad photodiodes 21A-24A, photogenerated current due to ambient room light is effectively cancelled, as well as temperature generated sensor dark current, resulting in a significant boost in signal to noise ratio of the illuminated image, as well as preventing switching noise of the detected image signal prior to amplification via the preamplifier circuitry discussed below with reference to Figure 3.

Since the photodiode sensor is peak responding, unlike prior art CCD sensors that integrate over an entire frame, the high peak intensities from a CRT phosphor can be readily sensed by the quad photodiode sensor 1 from low reflectivity surfaces such as rear screens and off-axis high-gain front screens.

The inner photodiodes 21A-24A and outer compensation diodes 21B-24B must be substantially matched such that, under uniform illumination, the compensation diode reverse photocurrent is equal to the inner quadrant diode photocurrent within +/- 1 percent.

According to a successful prototype, the area of each quadrant and compensation photodiode was 1.2 x 1.2 mm, with a metalization separation of 0.2 mm. The compensation photodiodes 21B-24B were placed as close as practical to corresponding respective ones of the inner quadrant photodiodes 21A-24A so as not to exceed a separation of 0.25 mm.

Turning to Figure 3, the automatic convergence system of the present invention is shown in block diagrammatic form as two functional parts: the locator assembly 26 and the control circuit 28, mounted on main circuit board 15 within cardcage 13 (Figure 1). Software for operating the circuitry illustrated in Figure 3 resides in a PROM (not shown) on the projector's remote control board within card cage 13 and running on the projector microprocessor.

The microprocessor and other circuitry associated with the projectors remote control board are not shown, but would be well known to a person skilled in the art.

The locator assembly 26 is primarily an optomechanical device whose function is to aim the photosensor array 1 and its imaging lens 3 at a point on a projection screen utilizing a pair of X and Y stepper motors 7A and 7B. As discussed, the assembly 26 is preferably attached to the front of the projector directly below the green lens, or in the case of a retrobox installation, directly above the green lens.

As discussed above with reference to Figure 1, the control circuit 28 is resident on a circuit board 15 located in a slot within the card cage 13 of the projector. The control circuit 28 contains all of the circuitry necessary to allow interfacing of the system microprocessor to the photosensor 1 and the X and Y motors 7A and 7B.

The photosensor 1 generates four analogue voltages proportional to the amount of light on each of the inner quadrant photodiodes 21A-24A. These signals are amplified via respective preamplifiers 30 and transmitted therefrom to respective analogue peak-hold circuits 32 which hold the highest voltage levels received until selectively discharged. The resultant "peak" signals output from circuits 32 are applied to a four-to-one analogue multiplexer 34 which selects one of the four channels for input to a 12-bit analogue to digital converter 36. Channel selection and initiation of data conversion are performed under control of the system microprocessor resident on the remote control board and accessible by data and address buses, and address decoded select lines through a microprocessor interface circuit 38.

The two stepper motors 7A and 7B in locator assembly 26 are controlled by identical circuits each consisting of a microstep controller 40A, 40B and a motor driver 42A and 42B. The microstep controller 40A, 40B receives digital data from the microprocessor and in response specifies the levels of currents to be applied to each of the two windings of the corresponding motor 7A, 7B, as determined by internal digital-to- analogue converters (not shown) that are loaded by the system microprocessor. The motor drivers 42A and 42B provide the specified current at 12 volts DC to both phases of the respective motors 7A and 7B.

The DC-DC booster 44 is provided for converting logic level +5 volt supply to the projector level +12 volt supply required for operating the X and Y motors 7A and 7B.

As discussed above, the hardware illustrated with reference to Figures 1-3, is operated under control of software resident on the remote control board (not shown) of the projector system. The software performs an automatic convergence by the repetition of four fundamental operations. Firstly, a "target" image is generated at the location in the projected image that is to be converged. Secondly, the photosensor 1 is aimed at the target image using the stepper motors 7A and 7B. Next, any misregistration between the colour components of the target image is sensed by analyzing the signal outputs of the photosensor 1. Finally, the colour components at the convergence point are moved using the projector's resident convergence circuitry to register the colours.

The projector convergence circuitry is not shown herein but is well known existing technology and would be readily understood by a person skilled in the art.

As shown in Figure 4, according to the preferred embodiment, 45 convergable points denoted by reference numeral 46 are provided on the projected raster arranged in a nine-by-five rectangular matrix (i.e. 9 horizontal points by 5 vertical points). These points are shown in Figure 4 in relation to a cross hatch internal video pattern 48. The positions of the red, green and blue component images are independently specified at each of the convergence points 46. Positions at all parts of an image between convergence points are calculated by linear interpolation: horizontally by software and vertically by a digital convergence circuit in real time. The digital interpolation circuitry referred to herein does not form part of the present invention, but is completely disclosed in applicant's corresponding pending Canadian Patent Application Serial No. 592,422 filed on March 1, 1989 (WO-A-90 10356 published on 07 September 1990).

According to the preferred embodiment, the green image is chosen as the reference into which the red and blue images must be registered. The quadrant photosensor 1 can determine, individually, the positions of all three colour images of a target at any convergence control point 46 on the screen. Any position error, or "misconvergence" between the green target image and the red (or blue) target image at a control point can be eliminated by moving the red (or blue) image to the same position as the green image using the projector's internal convergence coil correction circuitry. For off-centre points, the digital convergence board provides the necessary correction by interpolation, as indicated above. For the centre of the screen, the remote control board generates control voltages that specify the positions of each colour raster as a whole. Convergence of the colours must be ensured at the centre of the screen before converging any other areas.

The position of the green reference targets on the screen at various convergence points 46 is measured in the coordinate system illustrated with reference to Figure 4 by means of the two stepper motors 7A and 7B in the locator assembly 26. The motors 7A and 7B, supported orthogonally and constrained mechanically to sweep out finite angles, define part of a spherical coordinate system extending in a rectangular cone outward in space in front of the projector. A screen intersecting this cone can be considered to have a cross section of the coordinate system projected on its face, of which the horizontal axis is referred to as X and the vertical axis as Y. The origin is chosen to be a point in the lower left hand corner of the screen (as viewed from the projector). Position is defined in accordance with the present invention in terms of microsteps, which are subdivisions of the step angle of each motor 7A and 7B.

Relative position sensing of the colour targets (i.e. red-to-green and blue-to-green) is accomplished using the photosensor 1. In particular, the objective lens 3 (Figure 1) focuses the image of a target at which the motors 7A and 7B have pointed it onto the central four quadrants 21A-24A of the photosensor 1. The position of the centroid of the target image on the photosensor is calculated as a function of the sums and differences of the four photodiode signals, as discussed in greater detail below. The resulting centroid coordinates are referenced from the centre of the four quadrants and are expressed as fractions of the target image's extent on the photosensor 1 in the horizontal and vertical axis.

In accordance with the preferred embodiment, the targets are preferably small solid rectangles produced by the projector's character-based internal video generator (not shown) within card cage 13. The generator can display characters within a 32-by-32 matrix. The rectangular target is formed from a single character and thus measures 1/32 of the screen in width and 1/32 of the screen in height. The character must be placed on the screen as close to a convergence control point 46 as the character matrix will allow in order to accurately represent the true position of the point in the three component colours.

Upon power-up of the system, an initial selection menu 50 is accessed by depressing a "CONVERGE" button 49 on a remote or built-in keypad (not shown) of the projector system. The menu item "ACON CONVERGENCE" is illustrated as item 5 on the selection menu 50, in addition to various manual convergence mode choice selections. By selecting the "ACON CONVERGENCE" entry, the projector displays a new selection menu entitled "ACON CONVERGENCE" denoted by reference numeral 52 in Figure 5, allowing a choice between "full screen", "touch up" and "centre only (static)" options.

Once the "ACON CONVERGENCE" menu selection is made convergence of the image is completely automatic and terminates with an RGB cross hatch display 54 (Figure 6) allowing the user to examine the results of the convergence. A menu is superimposed on the cross hatch display 54 that allows a choice between saving or not saving the new convergence in non-volatile memory. After either selection in the "save" menu of Figure 6, the projector is returned to normal operation.

Although no user input is necessary during automatic convergence, the operation may be aborted at any time by pressing an "EXIT" key (not shown) of the remote or built-in key pad for at least one second. This results in termination of the convergence process and returning of the projector to normal operation. The projector may also be powered off in the middle of an automatic convergence, should the need arise, by depressing a "POWER" button (not shown).

Access to the "ACON CONVERGENCE" menu 52 is conditional on the presence of the control circuit 28 in the projector card cage 13. Without the circuit in place, the "ACON CONVERGENCE" menu 52 does not appear on the convergence menu 50 and cannot be selected.

In the event of a serious error occurring during an auto convergence or auto-centering operation, the system of the present invention provides for an automatic abort followed by the display of an error message. By depressing the "EXIT" key at this time, the projector is returned to normal operation. However, in the event the "EXIT" key is not depressed within 30 seconds from error display, the error is saved in non-volatile memory, the error message is erased from the screen and the projector is returned to normal operation. In this eventuality, the error message will then be displayed in the "ACON CONVERGENCE" menu 52 the next time it is accessed by the user.

On-line descriptions of the various convergence modes may be accessed by depressing a "help" key (not shown) of the remote or built-in key pad while in either of the "CONVERGENCE" menu 50 or "ACON CONVERGENCE" menu 52, resulting in the projector displaying a corresponding one of the menus 57 or 59, as depicted in Figure 7.

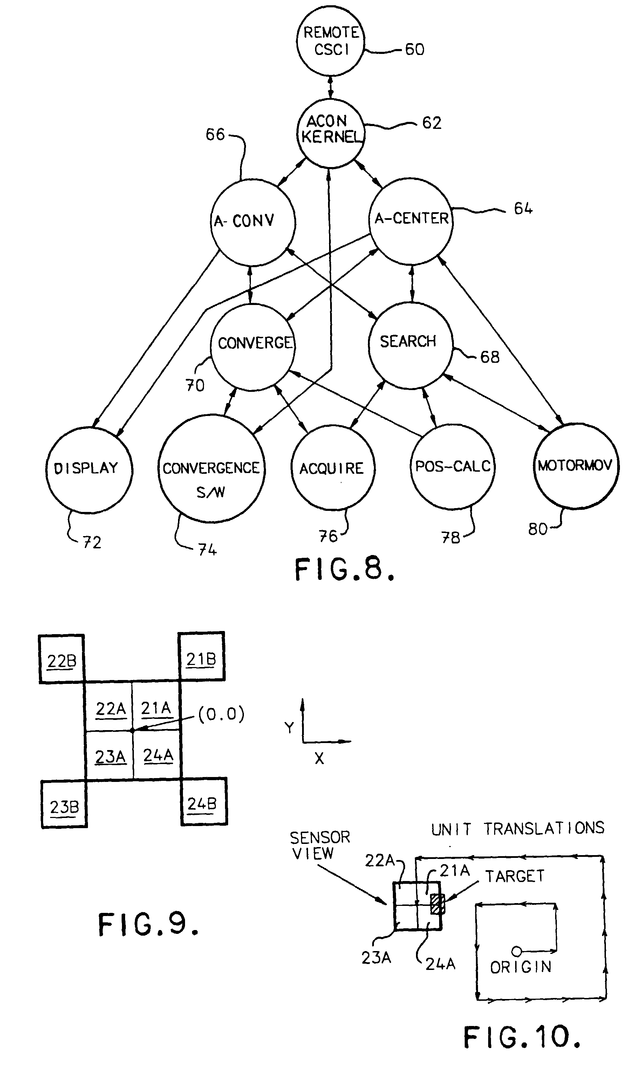

The software for implementing the present invention may be called from remote software module (i.e. REMOTE CSCI 60) by means of depressing the "CONVERGE" key 49. The software is composed of a hierarchy of modules with a kernel at the top, as shown with reference to Figure 8. Several levels of functionality separate subroutine modules in the middle and a set of "hardware drivers" are provided at the bottom of the flow chart. The actual module names and functions are listed below in Table A.

TABLE A

| A_KERNEL: | The ACON Kernel takes control of projector functions after the user presses the 'CONVERGE' button on the projector's built-in or remote keypad. It is responsible for the display of the Convergence and ACON menus, keypad input, ACON database management and the initiation of autocentering and autoconvergence (by calling A_CENTER and A_CONV). |
|---|---|
| A_CENTER : | This module's function is to register the blue and red rasters onto the green raster at the screen center (autocentering). |
| A_CONV: | This module performs a full screen convergence by registering the red and blue colours to the green at each and every control point on the screen. (A full screen convergence actually requires that both A_CENTER and A_CONV be called sequentially) |
| SEARCH : | The function of SEARCH is to locate with the photosensor (by moving the motors), a (green) reference target displayed at a specified convergence control point. Once it is located the routine microsteps the motors to bring the target's centroid to the center of the sensor. |
| CONVERGE: | This routine registers the blue or red image to the green image at a selected convergence control point. The actual manipulation of horizontal and vertical convergence positions is done through the Convergence software package by passing parameters to it specifying the desired on-screen movements. |
| POS_CALC : | This routine calculates the position of the centroid of a visible target's image on the photosensor given all four quadrant readings. |
| MOTORMOV: | This hardware driver controls the X and Y stepper motors to point the photosensor at a specified coordinate on the projection screen. |
| DISPLAY: | This hardware driver draws a target on the screen in red ,green or blue at a specified character position using the projector's internal video generator. |
| ACQUIRE: | This hardware driver reads the signals from all four quadrants of the photodiode array for a specified number of frames of video and returns the averaged values. |

With reference to Figure 8, the ACON kernel module 62 provides the required user interface and database management of lower level modules for implementing the present invention.

A_KERNEL is initiated when the user presses the "CONVERGE" button 49 on the projector's built-in or remote keypad. The Remote software module 60, sensing and identifying the keypress, passes control to the ACON kernel 62. The Kernel causes displaying of the CONVERGENCE menu 50 listing the available modes of convergence (Figure 5). It then checks for the presence of the ACON Control Board 28 in the projector. If the board is there, then "ACON Convergence" is added as the last menu item. The program then waits for an item selection keypress from the projector's keypad(s). If a manual convergence mode is selected by the user, the Kernel 62 passes control and the appropriate opcode to the Convergence software module 70. Control is passed back to the Kernel after the user terminates the manual convergence mode. The kernel in turn passes control back to the Remote software module 60. If "ACON CONVERGENCE" is selected from the menu then the "ACON CONVERGENCE" menu 52 is displayed (Figure 5) which allows a choice between full-screen convergence, touch up mode and static convergence (centre only). The program then waits for an item selection from this menu. If centering is chosen, the green-target motor coordinates for the center convergence point are copied from an internal BRAM database into an edit buffer in RAM comprising the X and Y motor coordinates for the green targets of all 45 convergence control points 46. This edit buffer is copied to and from the BRAM database by the ACON kernel 62. Next, the A_CENTER routine 64 is called. If either full-screen convergence or touchup mode is chosen then A_CENTER is similarly called. However when control is returned, provided the operations performed during A_CENTER did not generate a fatal error, all of the convergence point motor coordinates are recalled from BRAM and the A_CONV module 66 is called (with a flag set for Touch up mode if it was selected).

If a fatal error is generated at any point in either A_CENTER or A_CONV module executions then the corresponding process terminates and returns to the Kernel 62 with an appropriate error code. The corresponding error message is displayed on-screen until the user presses "EXIT" at which time control is passed back to the Remote software 60. If the user does not press "EXIT" within 30 seconds then the message is removed and the error is saved in the BRAM database. The next time the user enters the "ACON CONVERGENCE" menu 52, the error message will be shown below the menu entries as "Previous Error:<error message>".

To allow the user to abort an autoconvergence while it is in progress, a small timer-interrupt routine is implemented for the purpose of checking every quarter of a second for the detection of an "EXIT" or "POWER" keypress. If an "EXIT" keypress is detected four consecutive times (i.e. for one full second), control is passed back to the Remote software package 60. Similarly, if a "POWER" keypress is detected four times in a row then the projector is powered down, as discussed above.

After an autoconvergence is successfully completed the SAVE menu 56 is displayed superimposed on top of RGB crosshatch pattern 54 allowing the user to optionally save the new convergence to BRAM (Figure 6). Due to the possibility of bus noise coupling into the display screen the Remote Control Board's external bus is disabled while the menu 56 is displayed. If the user selects the "save" option, the Kernel 62 saves the updated green-target motor coordinates to the BRAM database and requests the Convergence software module 70 to save the convergence point data. If not, the screen is reconverged with the old data. Finally, control is passed back to the Remote software package 60.

The autocentering module 64 functions to register the red and blue rasters onto the green-target image at their respective centers.

The routine first establishes the origin of the motor coordinate system in the lower left hand corner of the screen (as viewed from the projector) by driving both motors 7A and 7B into a set of mechanical end-stops. This is done by initializing the motor coordinates to the largest values physically possible with the hardware and moving the motors at full speed to a destination position of (0,0). Since the motors may bounce from the endstops at a short distance, the initialization is repeated at a much slower speed and moving a much smaller distance to bring the motors snugly up against the endstops.

The screen contrast is set to a value of 70% of full. This sets the intensity of the targets produced by the projector's internal video generator to maximum (anti-blooming circuitry in the video generator prevents any increase in intensity above a setting of about 70%).

Next, the motor coordinates of the center convergence control points 46 (Figure 4) determined from the last autocentering operation, are retrieved from memory. If autocentering is being performed for the first time since a hard reset of the projector, the retrieved motor coordinate values are specified at a default value of FFFFH (hex), which is a physically impossible value indicating the reset. In this case the routine must locate the center of the screen with no previous knowledge of its position. To this end, the screen is blanked and a green horizontal bar running through the centre is displayed. The X motor 7A is moved to the center of its horizontal range and then moved incrementally "upwards" (away for the vertical endstop) until the sensor can "detect" the bar (i.e. when the signal from the sensor exceeds a visibility threshold). If autocentering is not being performed for the first time since a system reset then the motors 7A and 7B are simply moved to the retrieved coordinates.

Next, a green target is displayed at the center of an otherwise blank screen. The SEARCH subroutine 68 is called to find the target by moving the motors 7A and 7B, if necessary, in a spiral path within an area of defined size surrounding the present position, as discussed in greater detail below with reference to Figure 10. If the target cannot be found, the SEARCH module 68 returns an errorcode to the A_CENTER module 64 which then terminates with an errorcode signal being displayed in the form of: "green center not visible". If the green target has been located, the SEARCH module 68 attempts to center the target image on the sensor 1. The result may be in error due to the possibility of a high sensor signal clipping during analog-to-digital conversion. If clipping is detected, the contrast level is reduced such that the signal does not exceed 80% of A/D converter full scale. The new contrast level is saved and SEARCH is called again to center the target image and calculate more precisely the resulting centroid position on the sensor.

The center target is next displayed in red. the CONVERGE routine 70 is called to move the red target via centering voltages on the correction coils, so that the target is centered onto the sensor 1 (i.e. the red centroid is the same as that calculated for the green target). If for some reason this cannot be done, then the CONVERGE routine 70 will generate and transmit an errorcode to the A_CENTER module 64 which then returns to the calling program. Otherwise, the center target is displayed in blue. If the green signal was at least 50% of full scale then the screen contrast is reduced to 80% of the green contrast (to prevent the blue signal from clipping) and the coordinates are saved. The CONVERGE routine 70 is called again, this time to converge the blue onto the green. If this is successful, the A_CENTER module 64 saves a "no error" errorcode and returns control to the calling program.

The full screen autoconvergence module 66 functions to register the red and blue colours to the green target image at all on screen convergence control points 46. (Figure 4).

This routine converges the red and blue colours to the green target at all 45 convergence control points 46 (Figure 4) sequentially in a predetermined order to achieve full screen convergence. Both the red and blue images are converged fully at each control point before moving on to the next.

There are two possible orders of control point selection for convergence. One, used for "Full screen" mode, converges some of the control points more than once to compensate for a left-to-right convergence interaction inherent in the projector electronics (most apparent at scan frequencies above 35 KHz). The second sequence, used for "Touch-up" mode, converges each point only once and is used at low scan frequencies or when convergence errors are small. Neither sequence starts with the center point since it is assumed to have been converged initially by means of the A_CENTER module 64.

The A_CONV routine 66 starts by checking the state of the "Touch-up" flag and choosing one of the above-noted sequences accordingly. For each control point within the sequence the following algorithm is performed: the DISPLAY module 72 is called to draw a green reference target as close as possible to the control point position on an otherwise blank screen (the target row and column coordinates are accessed from an internal memory table). The contrast of the screen is then adjusted, by multiplying the green nominal contrast obtained at the center of the screen by a factor accessed from an internally stored "contrast table". This increases the contrast in the corners of the screen to attempt to compensate for projection lens vignetting. The SEARCH module 68 is then called to find the target by aiming the photosensor 1 with the motors 7A and 7B. If the target is located, SEARCH centers the target on the sensor 1 and calculates the target centroid position, as discussed below with reference to the POS_CALC module 78.

If the target is not located, then it is possible that the target could be off-screen. An off-screen control point that has an on-screen nearest neighbor must be converged to some degree even though it is not visible because the offscreen target will affect that portion of the image between itself and the on-screen control point. The off-screen target will even affect the on-screen control point itself if the above mentioned left-to-right interaction is large. According to one embodiment of the invention, an off-screen control point may be "converged" by copying to it the convergence parameters of an on-screen nearest neighboring control point. During "Full-screen" mode the existence of air off-screen target is further complicated by the left-to-right interaction effect discussed above. For instance, if the target for a control point on the extreme left edge of the raster is off-screen, the program skips it and attempts to converge the next point to the right. The parameters obtained are copied to the off-screen point and the right point is then converged again.

Assuming the green target at the current control point has been located, the screen colour is then switched to red. The screen contrast is set to the red nominal value times a factor from the contrast table. The CONVERGE module 70 is called to move the target by way of the Digital Convergence Board as close to the green target centroid position as possible.

The screen colour is then switched to blue, screen contrast is set to the blue nominal value times a table factor and the CONVERGE module 70 is called to register the blue to the green similarly. The target is then erased to prepare a blank screen for the next point.

The search module 68 functions to locate the green reference target image at a given convergence control point 46 and center its image on the photosensor 1.

In operating the search module 68, it is assumed that the calling program has specified a convergence control point 46 from one of the 45 possible points. The last known coordinates of the green reference target image associated with this point are retrieved from internal memory (i.e. BRAM). The motors 7A and 7B are moved to the indicated position and the photosensor 1 is accessed. If the target is not immediately visible to the photosensor 1, the motors 7A and 7B move the sensor in a "spiral" search path in the field of view of sensor 1 until the image can be seen, as shown with reference to Figure 10.

In the event the target cannot be found, an error code indicating this result is returned to the calling program.

In the event the target is found, the motors 7A and 7B are microstepped such that the target is moved to the center of the sensor 1 (within a defined window of accuracy) and an accurate calculation of the final centroid position is made. Finally, a "no error" error code is saved and the search module 68 returns to the calling program.

The converge module 70 functions to register either the red image or the blue image on top of the green image at a selected convergence control point 46.

It is assumed that the calling program has displayed a red or blue colour target at the specified convergence control point and that the sensor is pointing directly at the control point's currently invisible green target. The CONVERGE module 70 moves either the red image or the blue image at the control point 46 until the centroid of the target displayed is imaged on the photosensor 1 at the same position as the green target centroid.

The routine first checks to ensure that the sensor has detected the target. If the sensor has not detected the target, the target is moved outwardly from its current position in a spiral path in an attempt to intersect the sensor viewing field (Figure 10). The movement is accomplished using the Digital Convergence Board under the control of the Convergence software package 74. For each off-center convergence point, and for each colour, a pair of 8-bit values specify the horizontal and vertical displacement from "nominal" (center values are also specified as 8-bits but the total centering range is 12-bits). The CONVERGE module 70 controls the position of a colour at a convergence point by calling the Convergence software package 74 and passing to it the indices of the point, the colour and the desired horizontal and vertical movements.

The target is moved incrementally in the spiral path by a distance on the screen equal to half of the sensor's field of view. This is done until either the target is visible or until the end of the defined spiral search path is reached. (Visibility is determined by the consistent return of a signal from one of the photodiodes 21A-24A (Figure 2) above a "visibility threshold" level). If the target cannot be found then the CONVERGE module 70 returns control to the calling program with an errorcode. If a movement is specified during the spiral search (Figure 10) that exceeds the hardware range, the convergence software 74 moves the convergence point as far as possible and returns a non-zero errorcode, which is ignored by the spiral search algorithm.

If the target is found then its centroid coordinates are calculated. The differences in the coordinates between calculated centroid and the previously imaged green target centroid are used to calculate the amount of horizontal and vertical convergence correction required to zero the difference. The Convergence software package 74 is then called to perform the movement. Again, if the required movement is beyond the hardware range, the convergence software 74 moves the convergence point as far as possible and returns a nonzero errorcode. In this case as well, the CONVERGE module 70 returns to the calling program with an errorcode.

Otherwise, the target is moved the specified distance, and a new centroid position is calculated. The process continues in a loop until either the differences between the actual and desired horizontal and vertical coordinates are less than the minimum required for accurate convergence or a maximum number of attempts is exceeded. As the centroid gets closer to the reference position the number of averaged samples per sensor reading is increased in order to increase the accuracy of the result. The last few readings are done with the maximum frames required for full accuracy, a number calculated previously in A_CENTER

The display module 72 functions to display characters in red, green or blue at any one of the 32 by 32 possible character positions of the projector system.

This routine utilizes the video control board to display a character on the screen. The board can display any of 128 characters (ASCII text and special graphics) on screen within a 32 by 32 matrix. The calling program specifies the horizontal (i.e. column) and vertical (i.e. row) coordinates of the desired character position on the screen. It also specifies a colour code designating either red, green or blue. The display module 72 first selects a character mode and then enables the internal video display (via the video control board). Next, the projector gun controls are switched (via the projector waveform board) to display the specified colour. The code for the selected character (from any one of the 128 defined codes in the video control board character ROM) is then written to the video control board RAM at the address calculated to display the character at the specified position.

The CONVERGENCE S/W module 74 accepts as control data the direction of movement (horizontal or vertical), the colour to move, and the desired amount of movement and in response controls the digital convergence board to effect the movement of the chosen colour.

The ACQUIRE module 76 functions to "read" the photosensor 1 and obtain a value from each quadrant proportional to the amount of light that has fallen on the quadrant during a video frame from an on-screen video target.

It is assumed that when this routine is called a video target has already been projected on the screen and the sensor 1 is pointing at it. The target, composed of a series of short scanline segments, is displayed for approximately 1/32 of the field time. The peak hold circuit 32 on the ACON Control circuit 28 is designed to integrate the photosignals over the extent of each quadrant and to hold the peaks of each result to yield signals proportional to the light incident on each quadrant. These signals are then converted to digital via ADC 36 and are read by the microprocessor via interface 38 (Figure 3).

To commence a sensor reading, the four peak-hold circuits 32 are intitialized (discharged) during a vertical retrace period of the projection display. During the next video field, the light from the target will result in signals being generated from each quadrant. The peaks of these signals are held for the remainder of the field. During the next vertical retrace period each of the four peak-hold circuits 32 are read in succession. This is done for each circuit by selecting the appropriate channel of MUX 34, which initiates the analog-to-digital conversion via ADC 36. Once the ADC 36 completes its conversion, the 12-bit result is read from the ADC output register. The peak-hold circuits 32 must be discharged immediately after all four readings have been taken to allow the sensor 1 to be read again during the following video field.

The calling routine must specify the number of video fields over which the readings should be averaged. For the specified number of fields (assumed to be a power of two) sensor readings are taken and a running sum is maintained for each quadrant. Finally, the sums are divided by the number of fields to obtain averaged readings that are passed to the calling program upon return.

Due to the possibility of digital noise coupling into the picture and thereby affecting the sensor readings, it is necessary to ensure that the microprocessor external bus connected to the interface circuit 38 be disabled during the video integration time

The centroid position calculation module 78 functions to calculate the position of the centroid of a target imaged on the photosensor 1.

It is assumed that sensor readings denoted as Q1, Q2, Q3 and Q4 have been obtained, representing the light output of a target imaged on quadrants 21A to 24A, respectively. Furthermore, it is assumed that readings B1, B2, B3 and B4 have been taken of the background (no signal) light level on these quadrants via light-rejecting photodiodes 21B to 24B, respectively First, the background signals are subtracted from the target signals (i.e. V1 = Q1 - B1, V2 = Q2 - B2, V3 = Q3 - B3, V4 = Q4 - B4).

If the results are zero or negative, then they are set to zero + one least-significant bit. However, if all of the numbers are zero or negative then the routine exits without calculating a centroid (i.e. it doesn't make sense to calculate the centroid of the background signal). If all of the numbers are positive, however, the position of the centroid of the target image on the sensor is then calculated according to the following equations:

$$DX = \frac{W}{4} * \frac{V3\text{-}V1}{V3\text{+}V1} + \frac{W}{4} * \frac{V2\text{-}V4}{V2\text{+}V4}$$

and

$$DY = \frac{H}{4} * \frac{V3\text{-}V1}{V3\text{+}V1} - \frac{H}{4} * \frac{V2\text{-}V4}{V2\text{+}V4}$$

where DX and DY are the displacements of the centroid along the x axis (horizontal) and y axis (vertical) with respect to a local coordinate system (x,y) aligned with the sensor edges and with the origin (0,0) in the center (Figure 9). W is the width of the target image and H is its height. The arithmetic is done to 16-bit precision (sensor readings Q1, Q2, Q3, and Q4 are 12-bit values).

The motor control module 80 functions to aim the sensor 1 at a specified position on the projection screen.

This routine controls the positions of the X and Y stepper motors 7A and 7B in the locator assembly 26. The module 80 receives (X,Y) coordinates for a destination position from the calling program and subtracts from them the (X,Y) coordinates for the current position of the motors to determine the direction and "distance" (in microsteps) to move the respective motors. The X axis motor 7A is moved first, and then the Y axis motor 7B.

For any movement on either of the motors larger than a few microsteps, the motors 7A and 7B are accelerated toward a given speed and then decelerated to arrive at the destination position. This is done to avoid loosing steps and/or overshooting the destination position, since, in the preferred embodiment no additional mechanical damping is provided on the motors.

The maximum speed and acceleration/deceleration rates may be different for each motor 7A and 7B as a result of any differences in load mass and rotational inertia between the motors.

As an alternative, mechanical damping may be provided or software (i.e. electronic) damping may be effected depending on specific implementations.

In summary, according to the present invention, a completely automatic convergence system is provided utilizing inexpensive and highly accurate stepper motors for positioning a photosensor array to detect misregistration of component colour images. The system is highly accurate and has particular industrial applicability to rear view and off-axis high-gain display systems.

## Claims

1. An automatic convergence system for use in a video display, said system correcting mis-registration of component colour images projected onto a surface by respective video projectors, and comprising :

    a) means (28, 30) for generating a first component colour target image (46) at a predetermined convergence point on said surface, said target image being projected by a video projector corresponding to said first component;

    b) means (1) for locating the position of said target image on said surface relative to a predetermined reference frame;

    c) means (28, 30) for generating further component colour images, said further component colour images being projected by respective corresponding colour image video projectors;

    d) means (1) for locating respective positions of said further images relative to said reference frame, and;

    e) means (74) for successively calculating the differences between the positions of said first component colour target image and said respective positions of said further images and in response moving said further component colour images by respective amounts proportional to said differences until said differences are substantially eliminated, such that said target image and said further images are in substantial registration and said further component colour images are generated at said convergence point.

2. The system of claim 1 wherein both said means for locating are comprised of an assembly including :

    f) a rigid base (5);

    g) a photosensor (1) for optically detecting said target image (46) and said further images and in response generating respective analog voltage signals;

    h) a first stepper motor (7A) mounted to said base for movement about a first axis (X);

    i) a second stepper motor (7B) supporting said photosensor and mounted to said first stepper motor for movement about a second axis (Y) orthogonal to said first axis;

whereby said photosensor may be aimed at predetermined areas of said surface responsive to movement of said first and second stepper motors.

3. The system of claim 2, wherein said photosensor (1) further comprises a tubular housing (4) supported by said second stepper motor (7B), a photodiode array (21-24) disposed at one end of said housing, and an objective lens (3) disposed at an opposite end of said housing for focusing each said target image (46) and said further images on said photodiode array.

4. The system of claim 3, wherein said photodiode array further comprises four inner quadrant elements (21A-24A) for detecting the centroid of said target image and said further images and in response generating four respective ones of said analog signals, denoted as V1, V2, V3 and V4; and four corner elements (21B-24B) connected anode-to-cathode relative to respective ones of said inner quadrant elements for cancelling the effects of ambient light on said inner quadrant elements.

5. The system of claim 2, wherein said means for successively calculating further comprises a control circuit (30-36) for receiving said four analog voltage signals V1, V2, V3 and V4, and in response calculating horizontal and vertical displacements denoted as DX and DY, respectively, of said centroid from said predetermined reference frame, as follows :

$$DX = \frac{W}{4} * \frac{V3\text{-}V1}{V3\text{+}V1} + \frac{W}{4} * \frac{V2\text{-}V4}{V2\text{+}V4}$$

and

$$DY = \frac{H}{4} * \frac{V3\text{-}V1}{V3\text{+}V1} - \frac{H}{4} * \frac{V2\text{-}V4}{V2\text{+}V4}$$

where W and H represent the width and height, respectively, of said target image.

6. The system of claim 5, wherein said control circuit further comprises means (32) for receiving said four analog voltage signals and in response holding peak values thereof, means (34) for receiving and converting said peak values into corresponding digital values, and a microprocessor (38) for receiving said digital values and in response calculating said horizontal and vertical displacements.

7. The system of claim 6, wherein said control circuit further comprises first and second motor control circuits (40, 42) connected to said microprocessor and respective ones of said first and second stepper motors (7A, 7B) for selectively aiming said photosensor (1) at said predetermined areas in accordance with said horizontal and vertical displacements and under control of said microprocessor (38).

8. The system of claim 7, wherein each said first and second motor control circuits (40, 42) comprises a microstep controller (40A, 40B) for specifying current levels to be applied to each pair of windings in each said first and second stepper motors, and a motor driver (42A, 42B) for supplying said specified current to said windings at a predetermined voltage.

9. The system of claim 6, wherein said means for generating a first component and said means for generating a further component are comprised of a projector system connected to said microprocessor (38) for receiving said horizontal and vertical displacements and in response displaying predetermined ones of said target image (46) and said further images.

10. The system of claim 5, wherein said control circuit further comprises means (40, 42) for controlling said first and second stepper motors (7A, 7B) to move about said first and second axes (X, Y) in a predetermined sequence such that said photosensor (1) follows a spiral path of movement for locating respective ones of said target image (46) and said further images.

11. The system of any one of claims 1 to 10, wherein said means for locating the positions of said target image and said further component colour images comprises a photodiode sensor (1).

12. A method for use in a video display for correcting mis-registration of component colour images projected onto a surface, comprising the steps of :

a) generating a first component colour target image (46) at a predetermined convergence point on said surface, said target image being projected by a video projector corresponding to said first component;

b) locating the position of said target image on said surface relative to a predetermined reference frame;

c) generating further component colour images, said further component colour images being projected by respective corresponding colour image video projectors;

d) locating respective positions of said further component colour images relative to said reference frame; and

e) successively calculating the differences between the positions of said first component colour target image and said respective positions of said further images and in response moving said further component colour images by respective amounts proportional to said differences until said differences are substantially eliminated, such that said target image and said further images are in substantial registration and said further component colour images are generated at said convergence point.

13. The method of claim 12, wherein each said step of locating further images comprises detecting the centroid of said target image and said further images and in response generating a plurality of respective analog signals, denoted as V1, V2, V3 and V4, receiving said four analog voltage signals and in response calculating horizontal and vertical displacements denoted as DX and DY, respectively, of said centroid from said predetermined reference frame, as follows :

$$DX = \frac{W}{4} * \frac{V3\text{-}V1}{V3\text{+}V1} + \frac{W}{4} * \frac{V2\text{-}V4}{V2\text{+}V4}$$

and

$$DY = \frac{H}{4} * \frac{V3\text{-}V1}{V3\text{+}V1} - \frac{H}{4} * \frac{V2\text{-}V4}{V2\text{+}V4}$$

where W and H represent the width and height, respectively, of said centroid.

14. The method of claim 12 or 13, wherein the position of said target image or said further component colour images is detected by means of a photodiode sensor (1).

**Patentansprüche**

1. Automatisches Konvergenzsystem zur Verwendung in einer Videoanzeige, wobei das System eine Fehlausrichtung von Teilfarbbildem korrigiert, die von entsprechenden Videoprojektoren auf eine Fläche projiziert werden, umfassend:

a) eine Einrichtung (28, 30) zum Generieren eines ersten Teilfarben-Zielbildes (46) an einem vorbestimmten Konvergenzpunkt auf der Fläche, wobei das Zielbild von einem Videoprojektor projiziert wird, welcher der ersten Farbkomponente entspricht;

b) eine Einrichtung (1) zum Lokalisieren der Lage des Zielbildes auf der Fläche in Bezug auf einen vorbestimmten Referenzrahmen;

c) eine Einrichtung (28, 30) zum Generieren weiterer Teilfarbbilder, wobei die weiteren Teilfarbbilder von zugehörigen entsprechenden Farbbild-Videoprojektoren projiziert werden;

d) eine Einrichtung (1) zum Lokalisieren zugehöriger Lagen der weiteren Bilder in Bezug auf den Referenzrahmen; und

e) eine Einrichtung (74) zum sukzessiven Berechnem der Differenzen zwischen den Lagen des ersten Teilfarben-Zielbildes und der jeweiligen Lagen der weiteren Bilder und - ansprechend darauf - zum Bewegen der weiteren Teilfarbbilder um jeweilige Beträge, die proportional zu den Differenzen sind, bis die Differenzen im wesentlichen verschwunden sind, so daß das Zielbild und die weiteren Bilder im wesentlichen ausgerichtet sind und die weiteren Teilfarbbilder an dem Konvergenzpunkt erzeugt werden.

2. System nach Anspruch 1, bei dem die beiden Einrichtungen zum Lokalisieren aus einer Anordnung bestehen, welche aufweist:

    f) eine feste Basis (5);

    g) einen Photosensor (1) zum optischen Detektieren des Zielbildes (46) und der weiteren Bilder und - ansprechend darauf - zum Generieren entsprechender Analogspannungssignale;

    h) einen ersten Schrittmotor (7A), der für eine Bewegung um eine erste Achse (X) auf der Basis gelagert ist;

    i) einen zweiten Schrittmotor (7B), der den Photosensor trägt und für eine Bewegung um eine senkrecht auf der ersten Achse stehende zweite Achse (Y) an dem ersten Schrittmotor gelagert ist;

wodurch der Photosensor abhängig von der Bewegung des ersten und des zweiten Schrittmotors auf vorbestimmte Bereiche der Fläche gerichtet werden kann.

3. System nach Anspruch 2, bei dem der Photosensor (1) außerdem ein rohrförmiges Gehäuse (4) aufweist, welches von dem zweiten Schrittmotor (7B) getragen wird, ein Photodiodenfeld (21 - 24), das an einem Ende des Gehäuses angeordnet ist, und ein Objektiv (3), welches an dem entgegengesetzten Ende des Gehäuses angeordnet ist, um jedes Bild von dem Zielbild (46) und den weiteren Bildern auf das Photodiodenfeld zu fokussieren.

4. System nach Anspruch 3, bei dem das Photodiodenfeld außerdem vier innere Quadrantenelemente (21A - 24A) aufweist, um den Schwerpunkt des Zielbildes und der weiteren Bilder zu erfassen und ansprechend darauf vier zugehörige Analogsignale zu erzeugen, die mit V1, V2, V3 und V4 bezeichnet werden; und vier Eckelemente (21B - 24B) aufweist, die von der Anode zur Kathode an zugehörige innere Quadrantenelemente angeschlossen sind, um die Einflüsse von Umgebungslicht auf die inneren Quadrantenelemente zu beseitigen.

5. System nach Anspruch 2, bei dem die Einrichtung zum sukzessiven Berechnen außerdem aufweist: eine Steuerschaltung (30 - 36) zum Empfangen der vier Analogspannungssignale V1, V2, V3 und V4, um ansprechend darauf mit DX und DY bezeichnete horizontale bzw. vertikale Versetzungen des Schwerpunkts gegenüber dem vorbestimmten Referenzrahmen folgendermaßen zu berechnen:

$$DX = \frac{W}{4} \cdot \frac{V3\text{-}V1}{V3\text{+}V1} + \frac{W}{4} \cdot \frac{V2\text{-}V4}{V2\text{+}V4}$$

    und

$$DY = \frac{H}{4} \cdot \frac{V3\text{-}V1}{V3\text{+}V1} - \frac{H}{4} \cdot \frac{V2\text{-}V4}{V2\text{+}V4}$$

wobei W und H die Breite bzw. die Höhe des Zielbildes bedeuten.

6. System nach Anspruch 5, bei dem die Steuerschaltung außerdem aufweist: eine Einrichtung (32) zum Empfangen der vier Analogspannungssignale, um ansprechend darauf deren Spitzenwerte zu halten, eine Einrichtung (34) zum Empfangen und Umsetzen der Spitzenwerte in entsprechende Digitalwerte, und ein Mikroprozessor (38) zum Empfangen der Digitalwerte, um ansprechend darauf die horizontalen und vertikalen Versetzungen zu berechnen.

7. System nach Anspruch 6, bei dem die Steuerschaltung außerdem aufweist: eine erste und eine zweite Motorsteuerschaltung (40, 42), die an dem Mikroprozessor und den ersten bzw. den zweiten Schrittmotor (7A, 7B) angeschlossen sind, um den Photosensor (1) nach Maßgabe der horizontalen und vertikalen Versetzungen und unter Steuerung des Mikroprozessors (38) auf die vorbestimmten Bereiche zu richten.

8. System nach Anspruch 7, bei dem die erste und die zweite Motorsteuerschaltung (40, 42) eine Mikroschrittsteuerung (40A, 40B) aufweist, um Stromstärken zu spezifizieren, die in jedes Paar Wicklungen in dem ersten bzw. dem zweiten Schrittmotor eingespeist werden, und einen Motortreiber (42A. 42B) zum Zuführen des spezifizierten Stroms zu den Wicklungen bei einer vorbestimmten Spannungs.

9. System nach Anspruch 6, bei dem die Einrichtung zum Generieren einer ersten Farbkomponente und die Einrichtung zum Generieren einer weiteren Farbkomponente aus einem an den Mikroprozessor (38) angeschlossenen Projektorsystem gebildet sind, um die horizontalen und vertikalen Versetzungen zu empfangen und ansprechend darauf vorbestimmte Bilder von dem Zielbild (46) und den weiteren Bildern darzustellen.

10. System nach Anspruch 5, bei dem die Steuerschaltung außerdem eine Einrichtung (40, 42) aufweist, um den ersten und den zweiten Schrittmotor (7A, 7B) so zu steuern, daß diese sich um die erste bzw. die zweite Achse (X, Y) in einer vorbestimmten Abfolge drehen, damit der Photosensor (1) einer spiralförmigen Bewegungsbahn folgt, um entsprechende Bilder von dem Zielbild (46) und den weiteren Bildern zu lokalisieren.

11. System nach einem der Ansprüche 1 bis 10, bei dem die Einrichtung zum Lokalisieren der Lagen des Zielbildes und der weiteren Teilfarbbilder einen Photodioden-Sensor (1) aufweist.

12. Verfahren zur Verwendung in einer Videoanzeige zum Korrigieren der Fehlausrichtung von Teilfarbbildern, die auf eine Fläche projiziert werden, umfassend die Schritte:

   a) Generieren eines ersten Teilfarben-Zielbildes (46) an einem vorbestimmten Konvergenzpunkt auf der Fläche, wobei das Zielbild von einem der ersten Farbkomponente entsprechenden Videoprojektor projiziert wird;

   b) Lokalisieren der Lage des Zielbildes auf der Fläche in Bezug auf einen vorbestimmten Referenzrahmen;

   c) Generieren weiterer Teilfarbbilder, wobei die weiteren Teilfarbbilder von zugehörigen, entsprechenden Farbbild-Videoprojektoren projiziert werden;

   d) Lokalisieren der jeweiligen Lagen der weiteren Teilfarbbilder in Bezug auf den Referenzrahmen und

   e) sukzessives Berechnen der Differenzen zwischen den Lagen des ersten Teilfarben-Zielbildes und der jeweiligen Lagen der weiteren Bilder, um ansprechend darauf die weiteren Teilfarbbilder um entsprechende Beträge zu bewegen, die proportional sind zu den Differenzen, bis die Differenzen im wesentlichen verschwunden sind, so daß das Zielbild und die weiteren Bilder im wesentlichen ausgerichtet sind und die weiteren Teilfarbbilder an dem Konvergenzpunkt gebildet werden.

13. Verfahren nach Anspruch 12, bei dem jeder Schritt des Lokalisierens weiterer Bilder aufweist: Detektieren des Schwerpunkts des Zielbildes und der weiteren Bilder, um ansprechend darauf mehrere zugehörige Analogsignale zu erzeugen, die mit V1, V2, V3 und V4 bezeichnet sind, Empfangen der vier Analogspannungssignale, um ansprechend darauf die mit DX und DY bezeichneten horizontalen bzw. vertikalen Versetzungen des Schwerpunkts gegenüber dem vorbestimmten Referenzrahmen folgendermaßen zu berechnen:

$$DX = \frac{W}{4} \cdot \frac{V3\text{-}V1}{V3\text{+}V1} + \frac{W}{4} \cdot \frac{V2\text{-}V4}{V2\text{+}V4}$$

und

$$DY = \frac{H}{4} \cdot \frac{V3\text{-}V1}{V3\text{+}V1} - \frac{H}{4} \cdot \frac{V2\text{-}V4}{V2\text{+}V4}$$

wobei W und H die Breite bzw. die Höhe des Schwerpunkts sind.

14. Verfahren nach Anspruch 12 oder 13, bei dem die Lage des Zielbildes oder weiterer Teilfarbbilder mit Hilfe eines Photodioden sensors (1) detektiert wird.

## Revendications

1. Système de convergence automatique destiné à être utilisé dans un dispositif d'affichage vidéo, ledit système corrigeant les défauts de concordance d'images colorées composantes qui sont projetées sur une surface par des projecteurs vidéo respectifs, et comprenant :

   a) un moyen (28, 30) servant à produire une première image cible colorée composante (46) en un point de convergence prédéterminé de ladite surface, ladite image cible étant projetée par un projecteur vidéo correspondant à ladite première composante ;

b) un moyen (1) servant à localiser la position de ladite image cible sur ladite surface relativement à un cadre de référence prédéterminé ;

c) un moyen (28, 30) servant à produire des images colorées composantes supplémentaires, lesdites images colorées composantes supplémentaires étant projetées par des projecteurs vidéo d'images colorées correspondants respectifs ;

d) un moyen (1) servant à localiser les positions respectives desdites images supplémentaires par rapport audit cadre de référence, et

e) un moyen (74) servant à successivement calculer les différences entre les positions de ladite première image cible colorée composante et lesdites positions respectives desdites images supplémentaires et, en réponse, déplacer lesdites images colorées composantes supplémentaires de quantités respectives qui sont proportionnelles auxdites différences jusqu'à ce que lesdites différentes aient été sensiblement éliminées, de façon que ladite image cible et lesdites images supplémentaires se trouvent sensiblement en concordance et lesdites images colorées composantes supplémentaires soient produites audit point de convergence.

2. Système selon la revendication 1, où les deux dits moyens de localisation sont constitués par un ensemble comprenant :

f) une base rigide (5) ;

g) un détecteur photoélectrique (1) servant à détecter optiquement ladite image cible (46) et lesdites images supplémentaires et, en réponse, produire des signaux de tension analogiques respectifs ;

h) un premier moteur pas-à-pas (7A) monté sur ladite base pour se déplacer suivant un premier axe (X) ;

i) un deuxième moteur pas-à-pas (7B) portant ledit détecteur photoélectrique et monté sur ledit premier moteur pas-à-pas afin de se déplacer sur un deuxième axe (Y) perpendiculaire audit premier axe ;

de sorte que ledit détecteur photoélectrique peut viser des aires prédéterminées de ladite surface en réponse au déplacement desdits premier et deuxième moteurs pas-à-pas.

3. Système selon la revendication 2, où ledit détecteur photoélectrique (1) comprend en outre un boîtier tubulaire (4) porté par ledit deuxième moteur pas-à-pas (7B), un groupement de photodiodes (21-24) disposé en une extrémité dudit boîtier, et une lentille (3) faisant fonction d'objectif disposée en une extrémité opposée dudit boîtier afin de focaliser chaque dite image cible (46) et lesdites images supplémentaires sur ledit groupement de photodiodes.

4. Système selon la revendication 3, où ledit groupement de photodiodes comprend en outre quatre éléments formant des quadrants internes (21A-24A) servant à détecter le centre de gravité de ladite image cible et desdites images supplémentaires et, en réponse, produire quatre signaux respectifs parmi lesdits signaux analogiques, qui sont désignés par V1, V2, V3 et V4 ; et quatre éléments placés en coin (21B-24B) connectés de l'anode à la cathode par rapport aux éléments respectifs desdits éléments en quadrants internes afin d'annuler les effets de la lumière ambiante sur les éléments en quadrants internes.

5. Système selon la revendication 2, où ledit moyen qui effectue des calculs successifs comprend en outre un circuit de commande (30-36) servant à recevoir lesdits quatre signaux de tension analogiques V1, V2, V3 et V4, et, en réponse, calculer les déplacements horizontal et vertical, respectivement désignés par DX et XY, dudit centre de gravité par rapport audit cadre de référence prédéterminé, comme suit :

$$DX = \frac{W}{4} \cdot \frac{V3\text{-}V1}{V3\text{+}V1} + \frac{W}{4} \cdot \frac{V2\text{-}V4}{V2\text{+}V4}$$

et

$$DY = \frac{H}{4} \cdot \frac{V3\text{-}V1}{V3\text{+}V1} - \frac{H}{4} \cdot \frac{V2\text{-}V4}{V2\text{+}V4}$$

où W et H représentent respectivement la largeur et la hauteur de ladite image cible.

6. Système selon la revendication 5, où ledit circuit de commande comprend en outre un moyen (32) servant à recevoir lesdits quatre signaux de tension analogiques et, en réponse, maintenir des valeurs de crête de ceux-ci, un moyen (34) servant à recevoir lesdites valeurs de crête et à les convertir en des valeurs numériques correspondantes, et un microprocesseur (38) servant à recevoir lesdites valeurs numériques et, en réponse, calculer lesdits déplacements horizontal et vertical.

**7.** Système selon la revendication 6, où ledit circuit de commande comprend en outre des premier et deuxième circuits de commande de moteur (40, 42) connectés audit microprocesseur et, respectivement, auxdits premier et deuxième moteurs pas-à-pas (7A, 7B) afin qu'ils visent sélectivement ledit détecteur photoélectrique (1) en lesdites aires prédéterminées en fonction desdits déplacements horizontal et vertical et sous commande dudit microprocesseur (38).

**8.** Système selon la revendication 7, où chacun desdits premier et deuxième circuits de commande de moteur (40, 42) comprend un dispositif de commande de micro-pas (40A, 40B) servant à spécifier les niveaux de courant devant être appliqués à chaque paire de bobinages se trouvant dans chacun desdits premier et deuxième moteurs pas-à-pas, et un dispositif (42A, 42B) d'excitation de moteur servant à fournir ledit courant spécifié auxdits bobinages sous une tension prédéterminée.

**9.** Système selon la revendication 6, où ledit moyen servant à produire une première composante et ledit moyen servant à produire une composante supplémentaire sont constitués d'un système de projecteurs connecté audit microprocesseur (38) afin de recevoir lesdits déplacements horizontal et vertical et, en réponse, afficher des images prédéterminées parmi ladite image cible (46) et lesdites images supplémentaires.

**10.** Système selon la revendication 5, où ledit circuit de commande comprend en outre un moyen (40, 42) servant à commander lesdits premier et deuxième moteurs pas-à-pas (7A, 7B) afin qu'ils se déplacent sur lesdits premier et deuxième axes (X, Y) suivant une séquence prédéterminée, de façon que ledit détecteur photoélectrique (1) suive un trajet de déplacement en spirale afin de localiser des images respectives parmi ladite image cible (46) et lesdites images supplémentaires.

**11.** Système selon l'une quelconque des revendications à à 10, où lesdits moyens servant à localiser les positions de ladite image cible et desdites images colorées composantes supplémentaires comprennent un détecteur (1) à photodiodes.

**12.** Procédé destiné à être utilisé dans un dispositif d'affichage vidéo afin de corriger les défauts de concordance d'images colorées composantes projetées sur une surface, comprenant les opérations suivantes :

a) produire une première image cible colorée composante (46) en un point de convergence prédéterminé de ladite surface, ladite image cible étant projetée par un projecteur vidéo correspondant à ladite première composante ;
b) localiser la position de ladite image cible sur ladite surface par rapport à un cadre de référence prédéterminé ;
c) produire des images colorées composantes supplémentaires, lesdites images colorées composantes supplémentaires étant projetées par des projecteurs vidéo d'images colorées correspondants respectifs ;
d) localiser les positions respectives desdites images colorées composantes supplémentaires par rapport audit cadre de référence ; et
e) calculer successivement les différences entre les positions de ladite première image cible colorée composante et lesdites positions respectives desdites images supplémentaires et, en réponse, déplacer lesdites images colorées composantes supplémentaires de quantités respectives qui sont proportionnelles auxdites différences jusqu'à ce que lesdites différences soient sensiblement éliminées, de façon que ladite image cible et lesdites images supplémentaires se trouvent sensiblenment en concordance et lesdites images colorées composantes supplémentaires soient produites audit point de convergence.

**13.** Procédé selon la revendication 12, où chaque dite opération de positionnement d'images supplémentaires comprend les opérations consistant à détecter le centre de gravité de ladite image cible et desdites images supplémentaires et, en réponse, produire une pluralité de signaux analogiques respectifs, désignés par V1, V2, V3 et V4, recevoir lesdits quatre signaux de tension analogiques et, en réponse, calculer les déplacements horizontal et vertical, respectivement désignés par DX et DY, dudit centre de gravité par rapport audit cadre de référence prédéterminé, comme suit :

$$DX = \frac{W}{4} \cdot \frac{V3\text{-}V1}{V3\text{+}V1} + \frac{W}{4} \cdot \frac{V2\text{-}V4}{V2\text{+}V4}$$

et

$$DY = \frac{H}{4} \cdot \frac{V3\text{-}V1}{V3\text{+}V1} - \frac{H}{4} \cdot \frac{V2\text{-}V4}{V2\text{+}V4}$$

où W et H représentent respectivement la largeur et la hauteur dudit centre de gravité.

14. Procédé selon la revendication 12 ou 13, où la position de ladite image cible ou desdites images colorées composantes supplémentaires est détectée au moyen d'un détecteur (1) à photodiodes.

FIG.1.

FIG.2.

FIG.3.

FIG.4.

_49_

_50_

_52_

**CONVERGENCE**

1. GUIDED CONVERGENCE
2. ADVANCED RANDOM ACCESS
3. GREEN CONVERGENCE
4. CONVERGE ON PICTURE
5. ACON CONVERGENCE

PRESS 1,2,3,4 OR 5 TO SELECT

PRESS HELP FOR INSTRUCTIONS
PRESS EXIT TO RETURN

**ACON CONVERGENCE**

1. FULL SCREEN
2. TOUCH UP
3. CENTER ONLY (STATIC)

PRESS 1,2 OR 3 TO SELECT

PRESS HELP FOR INSTRUCTIONS
PRESS EXIT TO RETURN

## FIG.5.

_54_

SAVE CURRENT VALUES?

PUSH EXIT TO SAVE
PUSH 0 NOT TO SAVE

_56_

## FIG.6.

_57_

_59_

**CONVERGENCE HELP**

GUIDED MODE:
-FOR QUICK  MANUAL SETUP
ADVANCED RANDOM ACCESS:
-FOR TOUCHUP OF SPECIFIC AREAS
GREEN CONVERGENCE:
-PLEASE SEE OWNER'S MANUAL
CONVERGENCE ON PICTURE:
-USES SOURCE INSTEAD OF XHATCH
ACON MODE:
-AUTOMATIC CONVERGENCE
PRESS EXIT TO RETURN TO MENU

**ACON CONVERGENCE HELP**

FULL SCREEN:
-CONVERGENCES RED AND BLUE TO
 GREEN AT EVERY  ADJUSTABLE
 POINT ON THE SCREEN
CENTER ONLY (STATIC):
-CENTERS RED AND BLUE RASTERS
 ONTO THE SCREEN
TOUCH UP:
-QUICK TOUCH UP OF ALL POINTS
DURING ANY MODE PRESS EXIT
TO ABORT
PRESS EXIT TO RETURN TO MENU

## FIG.7.

FIG.8.

FIG.9.

FIG.10.